# EUROPÄISCHE PATENTANMELDUNG

(11) **EP 1 591 006 A2**
(43) Veröffentlichungstag der Anmeldung: **02.11.2005**
(21) Anmeldenummer: 05008832.7
(22) Anmeldetag: 22.04.2005
(51) Int. Cl.: A01G 23/089

(54) **Baumfäll-Vorrichtung**

(30) Priorität: 26.04.2004 DE 102004020286
(71) Anmelder: Link, Tobias, 72290 Lossburg (DE)
(72) Erfinder: Link, Tobias, 72290 Lossburg (DE)
(74) Vertreter: Meyer, Thorsten

(57) **Zusammenfassung**

Die Erfindung betrifft eine Baumfäll-Vorrichtung (1) zum Fällen eines Baumes durch Spreizung des Fällschlitzes, wobei scherenartig an einem Gelenk (2) angelenkte Spreizschenkel (22a, 22b) und Kraftaufnahmeschenkel (21a, 21b), mit einer an den Kraftaufnahmeschenkeln (21a, 21b) gelagerten Spindel (3) vorgesehen sind,
wobei die Spindel (3) an einem ersten Kraftaufnahmeschenkel (21b) gegenüber diesem ortsfest gelagert ist,
wobei die Spindel (3) an einem zweiten Kraftaufnahmeschenkel (21a) in einem an diesem ortsfest drehbar gelagerten Gegen-Gewinde (23) gelagert ist, wobei das Gegen-Gewinde in Eingriff mit dem Gewinde der Spindel (3) steht.

## Beschreibung

Die Erfindung betrifft eine Baumfäll-Vorrichtung zum Fällen eines Baumes durch Spreizung des Fällschlitzes.

Beim fachgerechten Fällen von Bäumen wird zuerst eine Fallkerbe angelegt. Diese Fallkerbe gibt die Fällrichtung des Baumes vor. Sie wird so tief wie möglich am Wurzelstock eingesägt, damit der Baumstumpf möglichst niedrig bleibt. Anschließend wird an der Gegenseite der Fällschlitz so angelegt, dass zwischen ihm und der Fallkerbe nur noch eine schmale Bruchleiste stehen bleibt. Der Fällschlitz wird etwas oberhalb angelegt als die Fallkerbe. Den Höhenunterschied, der dadurch entsteht, nennt man Bruchstufe.

Die üblichen Werkzeuge, welche zur Fällung von Bäumen eingesetzt werden, sind Spalthammer und Spreizkeile. Die Spreizkeile, welche zur Verminderung von Gewicht meistens aus Aluminium oder Kunststoff ausgeführt sind, werden mit dem Spalthammer in den Fällschlitz eingetrieben. Dadurch wird der Fällschlitz aufgeweitet und der Baum zu Fall gebracht.

Ein weiteres Hilfsmittel, das eher bei schwachem oder mittlerem Gehölz eingesetzt wird, ist der Fällheber. Mit ihm wird, ähnlich wie mit einer Brechstange, der Fällschlitz aufgehebelt. Außerdem gibt es Fällgeräte, mit welchen ein Keil in den Fällschlitz eingepresst wird. Der Antrieb erfolgt dabei über einen Ratschenhebel. Diese Fällgeräte konnten sich allerdings bisher nicht richtig durchsetzen.

Grundsätzlich muss mit allen Hilfsmitteln, die zur Fällung von Bäumen eingesetzt werden, der Fällschlitz des Baumstammes um ungefähr 30 Millimeter aufgeweitet werden können. Dies reicht in der Regel aus, um den Baum zum Umfallen zu bringen.

Die Gemeinsamkeit sämtlicher bekannter Utensilien zum Fällen von Bäumen, welche sich momentan auf dem Markt befinden, besteht darin, dass sie den Einsatz von körperlicher Arbeit für ihre Betätigung benötigen.

Aufgabe der Erfindung ist es eine Baumfäll-Vorrichtung (Baumfällgerät) zum Fällen eines Baumes durch Spreizung eines Fällschlitzes zur Verfügung zu stellen, das den Einsatz von körperlicher Arbeit nicht mehr in dem bisherigen Maße erfordert und die Nachteile des Stands der Technik überwindet.

Diese Aufgabe wird durch eine Baumfäll-Vorrichtung nach den Merkmalen des Anspruchs 1, durch eine Kettensäge nach den Merkmalen des Anspruchs 8 und eine Kupplung nach den Merkmalen des Anspruchs 9 gelöst.

Erfindungsgemäß ist eine Baumfäll-Vorrichtung zum Fällen eines Baumes durch Spreizung des Fällschlitzes vorgeschlagen, mit scherenartig an einem Gelenk angelenkten Spreizschenkeln und Kraftaufnahmeschenkeln, mit einer an den Kraftaufnahmeschenkeln gelagerten Spindel, wobei die Spindel an einem ersten Kraftaufnahmeschenkel gegenüber diesem ortsfest gelagert ist, wobei die Spindel an einem zweiten Kraftaufnahmeschenkel in einem an diesem ortsfest drehbar gelagerten Gegen-Gewinde gelagert ist, wobei das Gegen-Gewinde in Eingriff mit dem Gewinde der Spindel steht.

Die Spreizschenkel erfordern das Anbringen einer nur kleinen Kerbe am Fällschlitz, gegenüber der Fällkerbe. In dieser kleinen Kerbe wird die Baumfäll-Vorrichtung angesetzt.

Die Aufweitung des Fällschlitzes erfolgt dabei durch den Antrieb der Spindel und damit verbundenem Aufspreizen der Spreizschenkel.

Nach einer besonders bevorzugten Ausgestaltung der Erfindung ist vorgesehen, dass das drehbar gelagerte Gegen-Gewinde mittels eines über eine Kupplung lösbar verbundenen Motors angetrieben ist.

Dem folgend ist nach einer weiteren Variante vorgeschlagen, dass der Antrieb mit einer Motorsäge erfolgt.

Bevorzugterweise erreicht die Baumfäll-Vorrichtung eine Spreizkraft von mindestens 60 KN, bevorzugterweise 100 KN. Hierdurch ist eine Aufweitung des Fällschlitzes an der Eingriffstelle um mindestens 35 Millimeter möglich.

Die Steigung der Spindel und der motorische Antrieb ist bevorzugterweise so zu wählen, dass die Zeit für den Aufspreizvorgang mindestens 20 Sekunden beträgt, da die große Masse der Bäume über den Hebel der Spreizschenkel nur sehr langsam beschleunigt werden kann.

Eine weitere bevorzugte Ausgestaltung der Erfindung sieht vor, dass die Kupplung durch ein Kupplungsteil ausgebildet ist, dass in formschlüssigem lösbaren Eingriff mit einem motorisch angetriebenen Kupplungsgegenteil vorgesehen ist.

Um eine Antriebsmöglichkeit an einer Kettensäge als motorischem Antrieb herzustellen, ist dabei zu beachten, dass der Antrieb, vom Kraftfluss aus gesehen, hinter der Fliehkraftkupplung anzubringen ist. Die Fliehkraftkupplung steht somit vorteilhafterweise in ihrer Funktion auch für die Baumfäll-Vorrichtung zur Verfügung.

Von Vorteil dabei ist, dass die Anordnung der Kupplung und der Spindel, sowie dem mit dieser im Formschluss stehenden Gegen-Gewinde so ausgestaltet ist, dass sie ein Antreiben der Baumfäll-Vorrichtung in einer als motorischem Antrieb dienenden Kettensäge in einer üblichen Lage ermöglichen. Dabei ist die Funktion der Kettensäge in keiner Weise durch die Kupplungsteile beeinträchtigt.

Eine bevorzugte Weiterung der Erfindung sieht vor, dass ein Getriebe zwischen Motor und Spindel zur Übersetzung der Kraft und der gewünschten Drehzahl der Spindel vorgesehen ist.

Das Getriebe ist von Vorteil durch ein Schneckengetriebe ausgebildet.

Nach einer besonders vorteilhaften und daher bevorzugten Ausgestaltung der Erfindung ist vorgesehen, dass die Kraftaufnahme- und Spreizschenkel durch mehrere parallel zueinander angeordnete Einzelschenkel ausgebildet sind.

Dabei ist ein Längenverhältnis von 2:1 von Kraftaufnahmeschenkeln zu den Spreizschenkeln gewählt. Das bedeutet, dass mit einer Zugkraft der Spindel von 30 KN, die geforderte Arbeitskraft von 60 KN an den Greifplatten erzeugt werden kann.

Bevorzugterweise sind die Spreizschenkel an dem gegenüber dem Gelenk entferntem Ende miteinander über eine Griffplatte verbunden.

Nach einer besonders bevorzugten Ausgestaltung der Erfindung ist vorgesehen, dass der Motor durch eine Kettensäge ausgebildet ist.

Nach einem weiteren Aspekt der Erfindung ist eine Kettensäge zum Antrieb einer Baumfäll-Vorrichtung nach einem der Ansprüche 1 bis 6 vorgeschlagen, bei der ein Kupplungsgegenteil von Vorteil zum Eingriff mit einem Kupplungsteil der Baumfäll-Vorrichtung vorgesehen ist, wobei das Kupplungsgegenteil mittelbar oder unmittelbar mit einer Drehachse des Motors der Kettensäge verbunden ist.

Nach einem weiteren Aspekt der Erfindung ist eine Kupplung, zur Verbindung eines Motors insbesondere mit einer Baumfäll-Vorrichtung nach einem der Ansprüche 1 bis 7, vorgeschlagen, bei dem die Kupplung aus einem Kupplungsteil und einem Kupplungsgegenteil zum lösbaren formschlüssigen Eingriff mit diesem besteht, wobei das Kupplungsgegenteil mittelbar oder unmittelbar zur Verbindung mit einer Drehachse eines Motors einer Kettensäge vorgesehen ist.

Dem folgend ist nach einer weiteren Ausgestaltung vorgesehen, dass das Kupplungsgegenteil durch eine Öffnung in der Verkleidung (Kettendeckel) der Kettensäge geführt ist oder durch eine Öffnung mit dem Kupplungsteil erreichbar angeordnet ist. Hierdurch erfolgt die formschlüssige Verbindung der beiden Kupplungsteile durch eine am Kettendeckel (Ritzelabdeckung) der Motorsäge angebrachte Aussparung hindurch, so dass der Kettendeckel zum Herstellen des Kraftschlusses nicht entfernt werden muss. Durch den inneren Formschluss des Flansches besteht keinerlei Verletzungsgefahr beim normalen Gebrauch der Kettensäge. Um vor Verunreinigungen zu schützen, kann die Aussparung bei Nichtgebrauch mit einer Kappe verschlossen werden.

Bevorzugterweise ist das Kupplungsgegenteil aus einer fest mit der Drehachse des Motors der Kettensäge verbundenen Grundplatte und einem darauf befestigten Flansch ausgebildet, wobei der Flansch über Befestigungselemente wechselbar den Geometrien des Kupplungsteils entsprechend ausgestaltet ist.

Nachfolgend wird die Erfindung anhand der Zeichnungen weiter erläutert. Im Einzelnen zeigt die schematische Darstellung in:
- Fig. 1: eine schematische Seiten-Ansicht einer erfindungsgemäßen Baumfäll-Vorrichtung mit aufgespreizten Spreizschenkeln,
- Fig. 2: eine schematische Seiten-Ansicht der erfindungsgemäßen Baumfäll-Vorrichtung aus Fig. 1 mit zusammenbewegten Spreizschenkeln,
- Fig. 3: eine schematische Draufsicht auf die BaumfällVorrichtung aus Fig. 1,
- Fig. 4: eine schematische Ansicht von hinten auf die Baumfäll-Vorrichtung aus Fig. 2,

- Fig. 5: eine schematische Ansicht von vorne auf die Baumfäll-Vorrichtung aus Fig. 2,
- Fig. 6: einen einzelnen Hebel mit einem Spreizschenkel und einem Kraftaufnahmeschenkel,
- Fig. 7: eine schematische Ansicht auf das geöffnete Getriebe,
- Fig. 8: eine schematische Ansicht auf ein Kupplungsteil,
- Fig. 9: eine schematische Ansicht von vorne auf das getriebeseitige Ende des Kupplungsteils aus Fig. 8,
- Fig. 10: eine schematische Ansicht von vorne auf das motorseitige Ende des Kupplungsteils aus Fig. 8, und
- Fig. 11: eine schematische Ansicht das Kupplungsgegenteil, wobei die Grundplatte getrennt von dem darauf zu befestigenden Flansch dargestellt ist.

Die in den Figuren gleichen Bezugsziffern bezeichnen gleiche oder gleich wirkende Elemente.

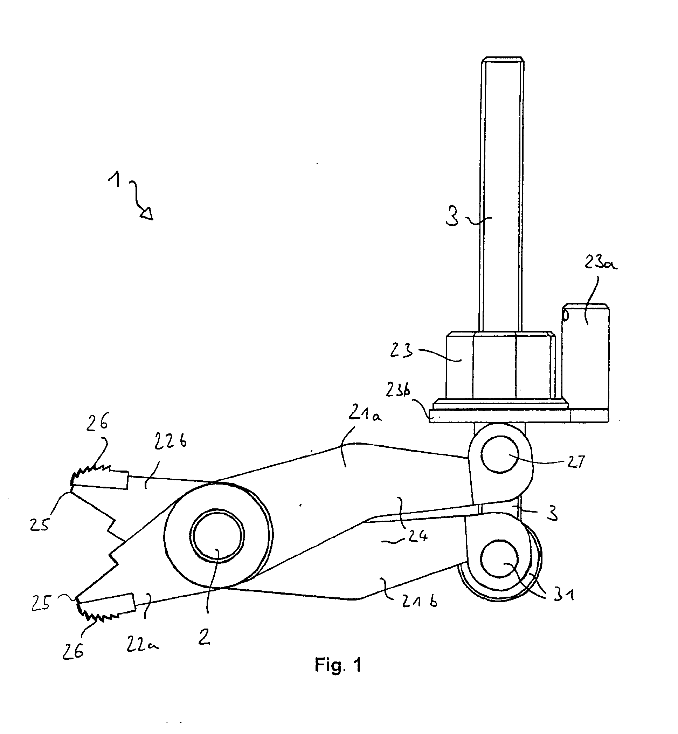

Fig. 1 zeigt eine schematische Seiten-Ansicht einer erfindungsgemäßen Baumfäll-Vorrichtung 1 mit aufgespreizten Spreizschenkeln 22a und 22b die scherenartig an einem Gelenk 2 angelenkt sind und über Kraftaufnahmeschenkel 21a, 21b mittels einer an den Kraftaufnahmeschenkeln 21a, 21b gelagerten Spindel 3 aufgespreizt oder zusammenbewegt werden.

Die Spindel 3 ist dabei an einem ersten Kraftaufnahmeschenkel 21b gegenüber diesem ortsfest in einem Lager 31 gelagert.

An einem zweiten Kraftaufnahmeschenkel 21a ist die Spindel 3 in einem an diesem ortsfest drehbar gelagerten Gegen-Gewinde 23 gelagert. Das Gegen-Gewinde 23 steht in Eingriff mit dem Gewinde der Spindel 3.

Das Gegen-Gewinde 23 ist dabei drehbar am Ende es Kraftaufnahmeschenkels 21a an einer Druckplatte 23b gelagert.

Die beiden Spreizschenkel 22a sind jeweils 22b an deren gegenüber dem Gelenk entferntem Ende 25 über eine Griffplatte 26 verbunden.

Der Antrieb erfolgt durch eine mit dem Gegengewinde gekoppelten Motorsäge.

Es ist dabei von Vorteil, dass die Motorsäge ein Antriebsdrehmoment von mindestens 3 Nm, bei einer angenommenen Arbeitsdrehzahl von 8000 1/Minute erbringt. Hierdurch wird die gewünschte Spreizkraft der Baumfäll-Vorrichtung erreicht.

Durch die erfindungsgemäße Baumfäll-Vorrichtung, die als separates Gerät zu bestehenden Kettensägen Verwendung findet, wird die Funktion der Kettensäge als Säge in keiner Weise einschränkt. Das Gerät ist gut handhabbar und leicht in seine Ausgangsposition zurück zu stellen. Zudem ist es einfach und schnell mit der Kettensäge zu koppeln und wieder zu trennen.

Durch die mögliche kompakte Bauart ist die Baumfäll-Vorrichtung leicht und einfach zu handhaben.

Die Hebelbolzen 27 übertragen die durch die Spindel 3 und Spindelmutter (Gegen-Gewinde 23) eingeleiteten Kräfte an die Kraftaufnahmeschenkel 21a und 21b. Die Krafteinleitung erfolgt über der Druckplatte 23b.

Beim unteren Hebelbolzen des ortsfesten Lagers 31 wird die Kraft über die Spindel 3 eingeleitet.

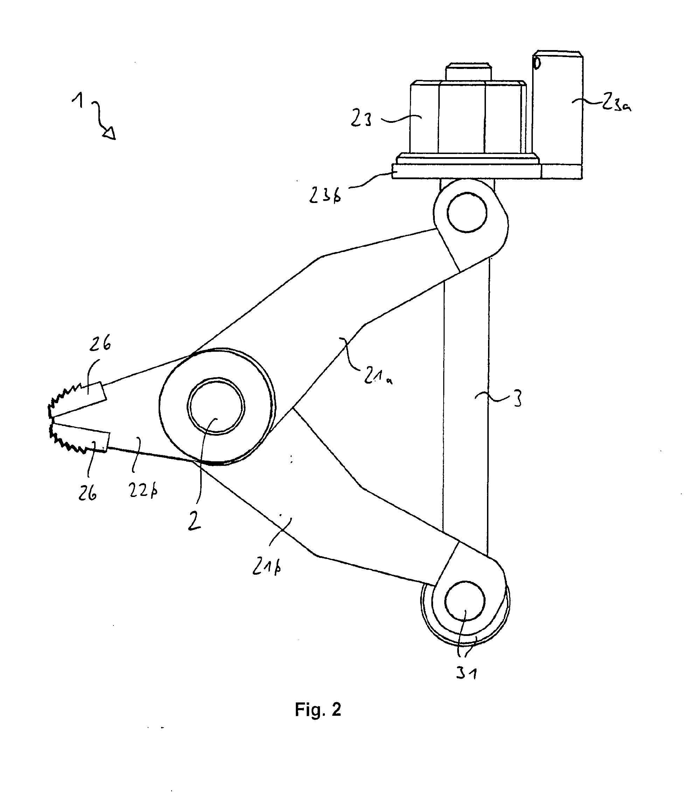

In Fig. 2 ist eine schematische Seiten-Ansicht der Baumfäll-Vorrichtung 1 aus Fig. 1 mit zusammenbewegten Spreizschenkeln 22a, 22b gezeigt. In diesem Zustand wäre die Baumfäll-Vorrichtung 1 in einen Fällschlitz mit den Spreizschenkeln 22a, 22b und den daran befestigten Griffplatten 26 einzuführen.

Die beiden Kraftaufnahmeschenkel 21a und 21b werden mittels der (Gewinde-)Spindel 3 zusammengezogen. Die Spreizschenkel 22a und 22b und Kraftaufnahmeschenkel 21a und 21b drehen sich dabei um das Gelenk 2. Beim aufeinander zu bewegen der Kraftaufnahmeschenkel 21a und 21b gehen die Spreizschenkel 22 a und 22b auseinander. Dadurch wird der Fällschlitz aufgeweitet. Der Baum fällt in die gewünschte Richtung.

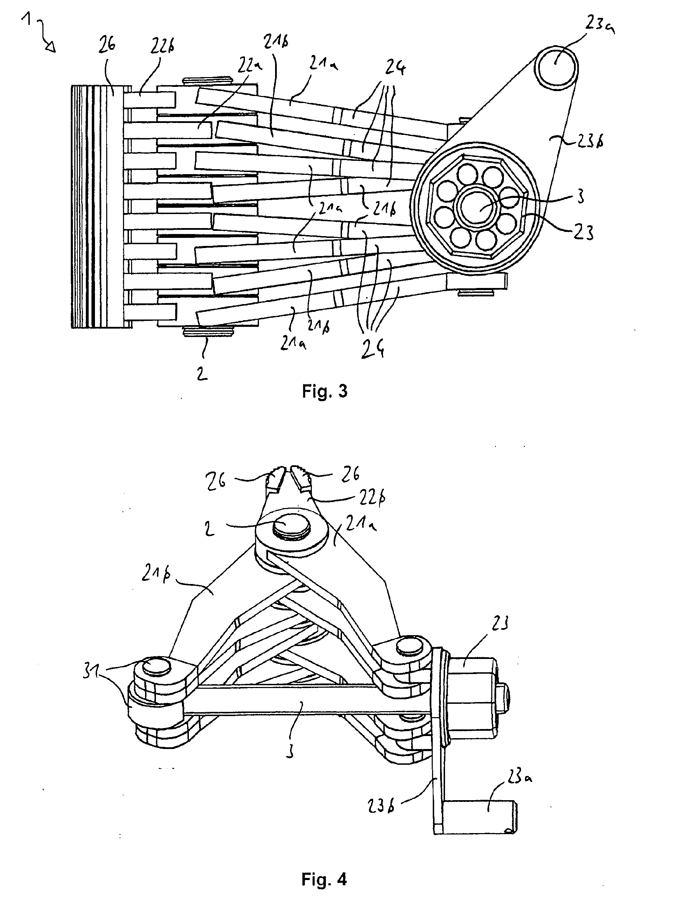

Fig. 3 zeigt eine schematische Draufsicht auf die Baumfäll-Vorrichtung 1 aus Fig. 1 und 2. In dieser Ansicht ist gut erkennbar, dass die Kraftaufnahme- und Spreizschenkel 21a, 21b, 22a , 22b durch mehrere parallel zueinander angeordnete Einzelschenkel 24 ausgebildet sind, die alle in einem gemeinsamen Gelenk 2 scherenartig angelenkt sind.

In Fig. 4 ist eine weitere schematische Ansicht von hinten auf die Baumfäll-Vorrichtung 1 aus den Fig. 1 bis 3 dargestellt.

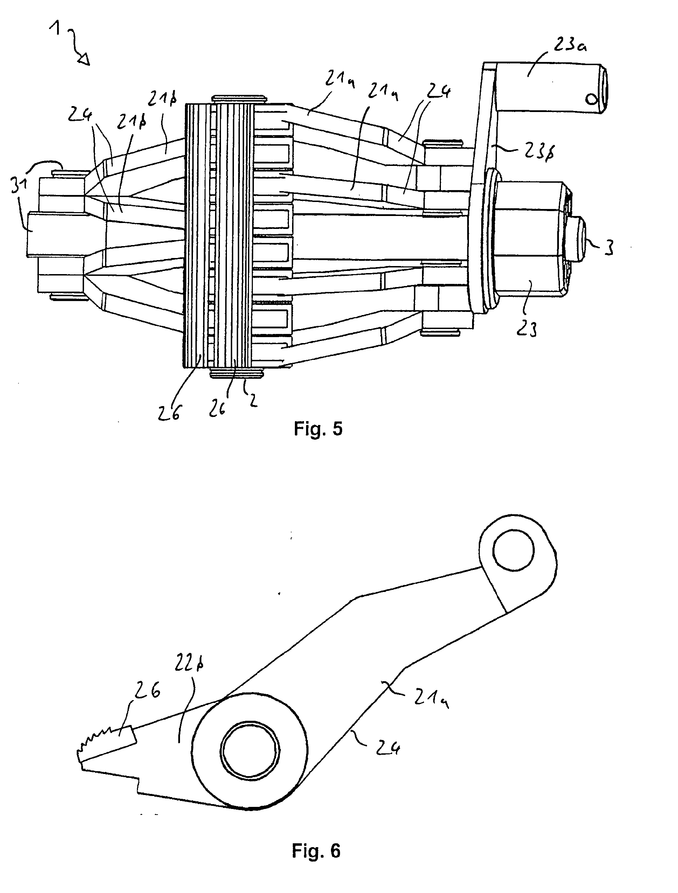

In Fig. 5 ist entsprechend Fig. 4 eine schematische Ansicht von vorne auf die Baumfäll-Vorrichtung 1 gezeigt.

Ein einzelner Schenkel 21a mit einem Spreizschenkel und einem Kraftaufnahmeschenkel ist in Fig. 6 näher dargestellt.

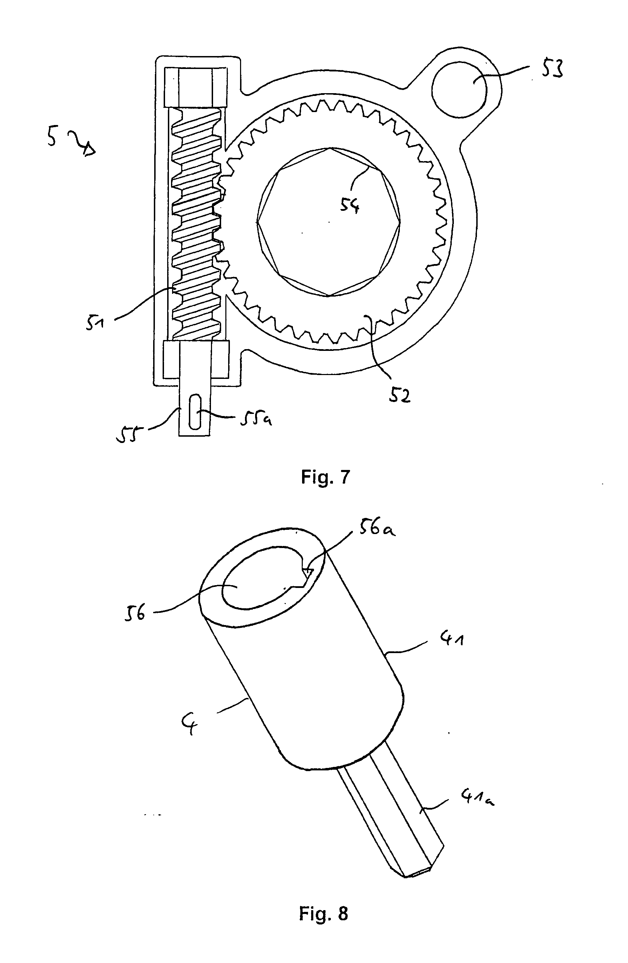

Das durch eine drehbar gelagerte Mutter ausgebildete Gegen- Gewinde 23 wird über ein in Fig. 7 gezeigtes Getriebe 5 zur Übersetzung der Kraft und der gewünschten Drehzahl der Spindel 3 mit dem antreibenden Motor einer Kettensäge verbunden.

Das Getriebe 5 ist als Schneckengetriebe ausgebildet, bei welchem der Antriebstutzen (Getriebefortsatz 55) direkt auf der Schnecke 51 angebracht ist. Das Schneckenrad 52 ist zum Eingriff mit dem Gegen-Gewinde 23 vorgesehen.

Die Sicherungs-Aufnahme 53 für die Verdrehsicherung 23a (siehe Fig. 1 bis 4) ist unbedingt erforderlich, da das Getriebe 5 auf die Baumfäll-Vorrichtung nur aufgesetzt wird und gegen Verdrehung unbedingt gesichert werden muss. Sie sorgt dafür, dass nur die Spindelmutter (Gegen-Gewinde 23) sich dreht und nicht das ganze Getriebe 5.

Die Druckfläche der Druckplatte 23b (siehe Fig. 1 bis 4) muss geschliffen und stets gut geschmiert sein, da die Druckfläche der Mutter (Gegen-Gewinde 23) darüber gleitet.

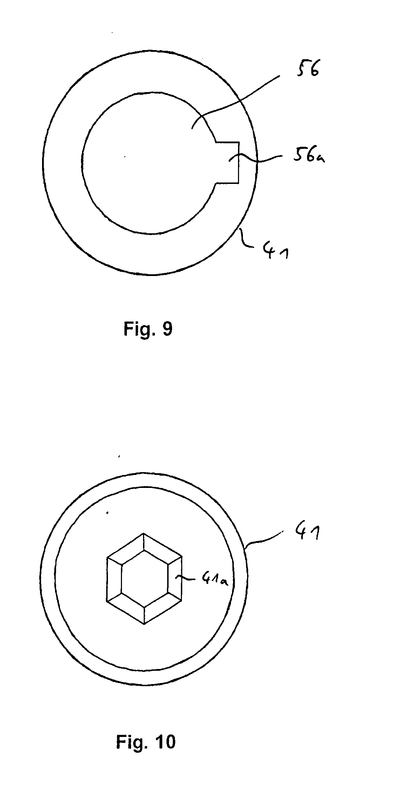

Die Fig. 8 bis 10 zeigen eine schematische Ansichten auf ein Kupplungsteil 41, das Teil der aus Kupplungsteil und Kupplungsgegenteil (42) gebildeten Kupplung 4 ist.

Der Getriebefortsatz 55 (siehe Fig. 7) weist eine Feder 55a auf, die mit einer in der Getriebeaufnahme 56 des Kupplungsteils 41 ausgebildeten Nut 56a zusammenwirkt.

An dem der Getriebeaufnahme 56 gegenüberliegenden, motorseitigen Ende des Kupplungsteils 41 ist ein Fortsatz 41a vorgesehen, der mit einer Aufnahme 41b am Kupplungsgegenteil 42 zusammenwirkt.

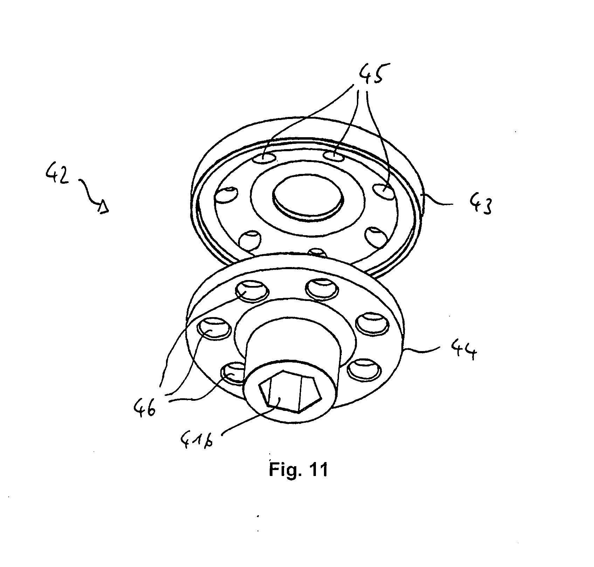

Ein solches, beispielhaftes Kupplungsgegenteil ist in Fig. 11 näher erläutert.

Die schematische Ansicht zeigt das Kupplungsgegenteil 42, wobei eine mit der Drehachse des Motors (nicht dargestellt) zu verbindende Grundplatte 43 getrennt von dem darauf zu befestigenden Flansch 44, der die Aufnahme 41b für den Fortsatz 41a des Kupplungsteils 41 aufweist, dargestellt.

Die Grundplatte ist zur festen, unlösbaren Verbindung mit dem Motor der Kettensäge vorgesehen. Um flexibel auf verschiedene Kupplungsteile anpassen zu können, wird der Flansch 44 mit gegebenenfalls entsprechend geformter Aufnahme 41b durch die Bohrungen 46 mittel Befestigungsschrauben in den Gewindebohrungen 45 der Grundplatte 43 festgelegt.

Die Grundplatte wird beispielsweise auf der Kupplungsglocke einer Kettensäge verlötet. Dies hat den Vorteil, dass die Kupplung der Kettensäge und die Kettenbremse mit Ihrer Funktionalität mitbenutzt werden kann, was bei einer Befestigung der Grundplatte an der Kurbelwelle nicht möglich wäre.

Zum Anbringen der Grundplatte kommt neben der Kupplungsglocke, das Ritzel und die Sägekette in Frage. Die Kurbelwelle scheidet wie erwähnt aus, da sie im Kraftfluss vor der Kupplung liegt und nicht ausgekuppelt werden kann.

### Bezugszeichenliste

- 1: Baumfäll-Vorrichtung
- 2: Gelenk
- 21a,b: Kraftaufnahmeschenkel
- 22a,b: Spreizschenkel
- 23: Gegen-Gewinde
- 23a: Verdreh-Sicherung
- 23b: Druckplatte
- 24: Einzelschenkel
- 25: entferntes Ende
- 26: Griffplatte
- 27: Hebelbolzen

- 3: Spindel
- 31: ortsfestes Lager

- 4: Kupplung
- 41: Kupplungsteil
- 41a: Fortsatz
- 41b: Aufnahme
- 42: Kupplungsgegenteil
- 43: Grundplatte
- 44: Flansch
- 45: Gewindebohrung
- 46: Bohrung

- 5: Getriebe
- 51: Schnecke
- 52: Schneckenrad
- 53: Sicherungs-Aufnahme
- 55: Getriebefortsatz
- 55a: Feder
- 56: Getriebeaufnahme
- 56a: Nut

## Patentansprüche

1. Baumfäll-Vorrichtung (1) zum Fällen eines Baumes durch Spreizung des Fällschlitzes,
**dadurch gekennzeichnet,**
**dass** scherenartig an einem Gelenk (2) angelenkte Spreizschenkel (22a, 22b) und Kraftaufnahmeschenkel (21a, 21b),
mit einer an den Kraftaufnahmeschenkeln (21a, 21b) gelagerten Spindel (3) vorgesehen sind,
wobei die Spindel (3) an einem ersten Kraftaufnahmeschenkel (21b) gegenüber diesem ortsfest gelagert ist,
wobei die Spindel (3) an einem zweiten Kraftaufnahmeschenkel (21a) in einem an diesem ortsfest drehbar gelagerten Gegen-Gewinde (23) gelagert ist, wobei das Gegen-Gewinde in Eingriff mit dem Gewinde der Spindel (3) steht.

2. Baumfäll-Vorrichtung nach Anspruch 1,
**dadurch gekennzeichnet,**
**dass** das drehbar gelagerte Gegen-Gewinde (23) mittels eines über eine Kupplung (4) lösbar verbundenen Motors angetrieben ist.

3. Baumfäll-Vorrichtung nach Anspruch 2,
**dadurch gekennzeichnet,**
**dass** die Kupplung (4) durch ein Kupplungsteil (41) ausgebildet ist, dass in formschlüssigem lösbaren Eingriff mit einem motorisch angetriebenen Kupplungsgegenteil (42) vorgesehen ist.

4. Baumfäll-Vorrichtung nach Anspruch 2 oder 3,
**dadurch gekennzeichnet,**
**dass** ein Getriebe (5) zwischen Motor und Spindel (3) zur Übersetzung der Kraft und der gewünschten Drehzahl der Spindel vorgesehen ist.

5. Baumfäll-Vorrichtung nach einem der Ansprüche 1 bis 4,
**dadurch gekennzeichnet,**
**dass** die Kraftaufnahme- und Spreizschenkel (21a, 21b, 22a, 22b) durch mehrere parallel zueinander angeordnete Einzelschenkel (24) ausgebildet sind.

6. Baumfäll-Vorrichtung nach Anspruch 5,
**dadurch gekennzeichnet,**
**dass** die Spreizschenkel (22a, 22b) an dem gegenüber dem Gelenk entferntem Ende (25) miteinander über eine Griffplatte (26) verbunden sind.

7. Baumfäll-Vorrichtung nach einem der vorhergehenden Ansprüche,
**dadurch gekennzeichnet,**
**dass** der Motor durch eine Kettensäge ausgebildet ist.

8. Kettensäge zum Antrieb einer Baumfäll-Vorrichtung nach einem der Ansprüche 1 bis 6,
**dadurch gekennzeichnet,**
**dass** ein Kupplungsgegenteil (42) zum Eingriff mit einem Kupplungsteil (41) der Baumfäll-Vorrichtung (1) vorgesehen ist,
wobei das Kupplungsgegenteil (42) mittelbar oder unmittelbar mit einer Drehachse des Motors der Kettensäge verbunden ist.

9. Kupplung, zur Verbindung eines Motors insbesondere mit einer Baumfäll-Vorrichtung nach einem der Ansprüche 1 bis 7,
**dadurch gekennzeichnet,**
**dass** die Kupplung (4) aus einem Kupplungsteil (41) und einem Kupplungsgegenteil (42) zum lösbaren formschlüssigen Eingriff mit diesem besteht, wobei das Kupplungsgegenteil (42) mittelbar oder unmittelbar zur Verbindung mit einer Drehachse eines Motors einer Kettensäge vorgesehen ist.

10. Kupplung nach Anspruch 9,
**dadurch gekennzeichnet,**
**dass** das Kupplungsgegenteil (42) durch eine Öffnung in der Verkleidung (Kettendeckel) der Kettensäge geführt ist oder durch die Öffnung mit dem Kupplungsteil erreichbar angeordnet ist.

11. Kupplung nach Anspruch 9 oder 10,
**dadurch gekennzeichnet,**
**dass** das Kupplungsgegenteil aus einer fest mit der Drehachse des Motors der Kettensäge verbundenen Grundplatte und einem darauf befestigten Flansch ausgebildet ist, wobei der Flansch über Befestigungselemente wechselbar den Geometrien des Kupplungsteils entsprechend ausgestaltet ist.
